# EUROPÄISCHE PATENTSCHRIFT

(11) **EP 2 252 561 B1**
(45) Veröffentlichungstag und Bekanntmachung des Hinweises auf die Patenterteilung: **16.04.2014**
(21) Anmeldenummer: 09718718.1
(22) Anmeldetag: 26.02.2009
(51) Int. Cl.: C04B 28/26, C03C 17/42, C09D 1/02, B32B 17/00, C04B 111/28, C04B 111/80

(54) **LICHTDURCHLÄSSIGES HITZESCHUTZELEMENT MIT ALUMINAT- ODER BORAT-MODIFIZIERTEM SILIZIUMDIOXID**
LIGHT-PERMEABLE HEAT PROTECTION ELEMENT WITH ALUMINATE-MODIFIED OR BORATE-MODIFIED SILICON DIOXIDE
ÉLÉMENT DE PROTECTION THERMIQUE TRANSPARENT CONTENANT DU DIOXYDE DE SILICIUM MODIFIÉ PAR ALUMINATE OU BORATE

(30) Priorität: 10.03.2008 CH 354082008
(43) Veröffentlichungstag der Anmeldung: 24.11.2010
(73) Patentinhaber: Vetrotech Saint-Gobain (International) AG, 3175 Flamatt (CH); Akzo Nobel Chemicals International B.V., 3811 MH Amersfoort (NL)
(72) Erfinder: PANTKE, Dietrich, 40882 Ratingen (DE); PUPPE, Lothar, 51399 Burscheid (DE); MELZER, Hartmut, 40789 Monheim (DE); SCHMITZ, Peter-Nikolaus, 40764 Langenfeld (DE); SCHWANKHAUS, Norbert, 52499 Baesweiler (DE); GELDERIE, Udo, 52146 Würselen (DE)
(74) Vertreter: Frei Patent Attorneys
(86) Internationale Anmeldenummer: PCT/CH2009/000080
(87) Internationale Veröffentlichungsnummer: WO 2009/111897

(56) Entgegenhaltungen:
- WO-A-94/04355
- WO-A-02/100636
- WO-A1-03/022940
- WO-A1-2007/118887
- US-A- 3 721 574
- US-A- 3 878 034
- US-A1- 2003 118 861
- ILER K R: "ADSORPTION OF SILICA PARTICLES ON SURFACES" CHEMISTRY OF SILICA,, 1. Januar 1979 (1979-01-01), Seiten 405-410, XP009030337 in der Anmeldung erwähnt
- "Ludox AM-30 colloidal silica" INTERNET CITATION 10. Juni 2005 (2005-06-10), Seite 1, XP002505552 Gefunden im Internet: URL:http://www.sigmaaldrich.com/catalog/se arch/SpecificationSheetPage/ALDRICH/420875 > [gefunden am 2008-11-20]

## Beschreibung

Die Erfindung betrifft ein lichtdurchlässiges Hitzeschutzelement mit mindestens zwei Trägerelementen und mindestens einer zwischen zwei Trägerelementen angeordneten, transparenten Schutzschicht umfassend ein Reaktionsprodukt enthaltend wässrige Alkalisilikatlösung und aluminat- oder boratmodifiziertes Siliziumdioxid sowie ein Verfahren zu dessen Herstellung.

DE-A 2 414 575 beschreibt feuerabschirmende Glasscheiben enthaltend eine feuerhemmende Schicht, umfassend eine Kunststoffmembran, die mindestens auf einer Seite eine Schicht aufweist, welche ein barrierebildendes Material enthält. Dieses Material kann gegebenenfalls ein Aluminat oder ein Alkalisilikat sein. Der Zweck dieses Materials ist, dass die Schicht(en) bei Erwärmung für Infrarotstrahlung undurchlässiger werden, da dieses Material thermisch isolierende Barrieren bildet.

US 4,190,698 beschreibt lichtdurchlässige Brandschutzscheiben enthaltend wenigstens eine getrocknete Schicht bestehend aus hydratisierten Alkalimetallsilikaten und einem oder mehreren Hilfsstoffen wie beispielsweise Harnstoff, mehrwertige Alkohole, kolloidales Silika oder Natriumaluminat. Bei Verwendung von kolloidalem Silika und Natriumaluminat wird ein Modul von kleiner 4 erreicht. Zweck der Zugabe der Hilfsstoffe ist, dass die Widerstandsfestigkeit der Schicht, und damit der Brandschutzscheibe, im Brandfalle verbessert wird. Nachteilig bei der Herstellung dieser Brandschutzscheiben ist, dass eine produktionstechnisch aufwendige Verdampfung von Wasser aus der ursprünglichen Formulierung erforderlich ist. Die getrocknete Brandschutzschicht entsteht durch Aufgiessen auf eine offene Fläche und anschliessendes Trocknen und kann nicht in geschlossenen Hohlräumen gebildet werden. Es ist auch bekannt, dass die Zugabe von Natriumaluminat zur Schutzschicht zu Ausfällungen und damit, als weiterer Nachteil, zu einer raschen Eintrübung der Schutzschicht führt.

WO-A 2004/014813 beschreibt die Herstellung von Hitzeschutzelementen auf Basis einer Lösung bestehend aus Wasserglas und einem Aluminat, wobei das Aluminat vor der Zugabe zu der Silikatlösung mit organischen Säuren wie Zitronensäure partiell neutralisiert werden muss. Erfolgt keine partielle Neutralisierung des Aluminats, so wird keine stabile Lösung aus Wasserglas und Aluminat erhalten. Nachteilig bei der Herstellung dieser Hitzeschutzelemente ist, dass eine produktionstechnisch aufwendige Verdampfung von Wasser aus der ursprünglichen Formulierung für die Hitzeschutzelemente erforderlich ist.

In WO-A 94/04355 wird die Herstellung eines lichtdurchlässigen Hitzeschutzelementes mit mindestens einem Trägerelement und einer Schutzschicht aus wasserhaltigem Alkalisilikat beschrieben. Solche lichtdurchlässigen Hitzschutzelemente finden beispielsweise Anwendung zur Produktion von Brandschutzgläsern. Wesentlicher Bestandteil der Hitzeschutzelemente ist die Schutzschicht aus wasserhaltigem Alkalisilikat, das durch Reaktion eines Alkalisilikats und eines Kieselsäureaquasols in einem derartigen Mischungsverhältnis erzeugt wird, dass das Molverhältnis Siliziumdioxid zur Gesamtmenge an Alkalimetalloxid, der sogenannte Modul, grösser als 4 : 1 ist. Die Kieselsolkomponente wird dabei als Härter des Alkalisilkats eingesetzt. Durch die Härtung mit Kieselsolen kann auf die produktionstechnisch aufwendige Verdampfung von Wasser aus der ursprünglichen Formulierung der Schicht, wie sie bei anderen bekannten Schutzschichten notwendig ist, verzichtet werden.

Nachteilig an den Schutzschichten aus wasserhaltigem Alkalisilikat und Kieselsol als Härter gemäss WO-A 94/04355 ist jedoch ihre Tendenz zur Eintrübung im Verlaufe der Einsatzzeit. Dies gilt insbesondere bei der in Sommermonaten durchaus länger andauernden Einwirkung von Temperaturen oberhalb 20°C, die den Eintrübungsprozess beschleunigen kann.

Elektronenmikroskopische Aufnahmen bestätigen, dass die Eintrübung der wässrigen Alkalisilikatschutzschicht durch einen Kristallisatiohsprozess hervorgerufen wird. Bekanntermassen fördern die Zusätze von Oxiden der Elemente der III. Hauptgruppe des Periodensystems wie insbesondere Bor- oder Aluminiumoxid Kristallisationsprozesse in Gläsern und sollten demnach erwartungsgemäss die Eintrübung von Gläsern beschleunigen.

Es bestand somit ein Bedarf an lichtdurchlässigen Hitzeschutzelementen sowie Materialien für die Verwendung als Schutzschicht in solchen Hitzeschutzelementen, welche eine hohe Transparenz und Alterungsbeständigkeit aufweisen. Zudem soll die Ausgangsmasse für die Schutzschicht fliessfähig und zum Eingiessen in Hohlräume geeignet sein und anschliessend in angemessener Zeit zur Schutzschicht aushärten.

Die Aufgabe der vorliegenden Erfindung bestand somit darin, solche Hitzeschutzelemente sowie Materialien für die Verwendung als Schutzschicht in diesen Hitzeschutzelementen zur Verfügung zu stellen.

Diese Aufgabe wurde überraschend dadurch gelöst, dass die Schutzschicht ein Reaktionsprodukt enthaltend wässrige Alkalisilikatlösung und aluminat- oder borat-modifiziertes Siliziumdioxid umfasst, wobei dieses Reaktionsprodukt ein Modul (Molverhältnis Silizium-dioxid zu Alkalimetall-oxid) von 4 bis 7 aufweist. Ein Zusatz von organischen Säuren gemäss WO-A 2004/014813 ist hier nicht erforderlich.

Gegenstand der vorliegenden Erfindung ist demnach ein lichtdurchlässiges Hitzeschutzelement mit mindestens zwei Trägerelementen und mindestens einer zwischen zwei Trägerelementen angeordneten, transparenten Schutzschicht umfassend ein Reaktionsprodukt enthaltend wässrige Alkalisilikatlösung und aluminat-oder borat-modifiziertes Siliziumdioxid, dadurch gekennzeichnet, dass das Reaktionsprodukt ein Modul von 4 bis 7 aufweist.

Als wässrige Alkalisilikatlösung kann Wasserglas, bevorzugt Kaliwasserglas, eingesetzt werden.

Das im Rahmen der Erfindung geeignete Siliziumdioxid kann beispielsweise in Form von Fällungssiliziumdioxid, Kieselgel, pyrogenem Siliziumdioxid oder Kieselsolen in die Schutzschichten eingesetzt oder daraus hergestellt werden. Bevorzugt ist die Verwendung von pyrogenen Siliziumdioxid oder Kieselsolen, besonders bevorzugt von Kieselsolen. Das wasserhaltige Siliziumdioxid wird vorzugsweise aus stabilen Suspensionen, Solen oder Gelen sowie kolloidalen bzw. kolloiddispersen Lösungen, wie beispielsweise Kieselsäuresole (Kieselsole), solcher Siliziumdioxidformen hergestellt. Dem Fachmann sind Kieselsole und deren Herstellung bekannt. Kieselsole sind kommerziell erhältlich, beispielhaft seien hier die unter dem Handelsnamen Levasil^{®} erhältlichen Produkte der Firma. H. C. Starck GmbH genannt.

Kieselsole stellen kolloidale Lösungen von amorphem Siliziumdioxid in Wasser dar, die auch als Siliziumdioxidsole meist aber kurz als Kieselsole bezeichnet werden. Das Siliziumdioxid liegt dabei in Form von kugelförmigen und an der Oberfläche hydroxilierten Partikeln vor. Der Partikeldurchmesser der Kolloidteilchen beträgt in der Regel 1 bis 200 nm, wobei die zur Teilchengrösse korrelierende spezifische BET-Oberfläche (bestimmt nach der Methode von G.N.Sears, Analytical Chemistry Vol. 28, N. 12, 1981-1983, Dezember 1956) bei 15 bis 2000 m²/g liegt. Die Oberfläche der SiO₂-Teilchen weist eine Ladung auf, die durch ein entsprechendes Gegenion ausgeglichen wird, das zur Stabilisierung der kolloidalen Lösung führt.

Erfndungsgemäss geeignete Kieselsole weisen einen pH-Wert von 7 bis 11,5 auf und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Unter den angegebenen pH-Werten sind, soweit nicht anders gekennzeichnet, pH-Werte zu verstehen, die bei 25°C bestimmt werden. Die Feststoff-Konzentrationen von geeigneten Kieselsolen liegen bevorzugt bei 5 bis 60 Gewichtsprozent (Gew.-%) SiO₂.

Im Rahmen der Erfindung kann aluminat-modifiziertes Siliziumdioxid, insbesondere aluminat-modifiziertes Kieselsol, beispielsweise durch Zugabe einer passenden Menge Aluminationen, Al(OH)₄⁻, zu Siliziumdioxid unter Rühren hergestellt werden. Die Lösung von Aluminationen ist geeigneterweise eine verdünnte Natriumoder Kaliumaluminatlösung. Die Siliziumdioxidteilchen weisen geeigneterweise etwa 0,05 bis etwa 2, vorzugsweise etwa 0,1 bis etwa 2 Al-Atome/nm² Oberfläche der Siliziumdioxidteilchen auf. Die aluminat-modifizierten Siliziumdioxidteilchen umfassen eingefügte oder ausgetauschte Aluminationen, wobei sie Aluminosilikatstellen mit einer fixierten negativen Oberflächenladung erzeugen. Die aluminat-modifizierten Siliziumdioxidteilchen behalten ihre hohe negative Oberflächenladung im Gegensatz zu herkömmlichen nicht modifizierten Siliziumdioxid bis zu einem pH-Wert von 3 bei. Bei nicht modifiziertem Siliziumdioxid nimmt die negative Oberflächenladung ab, wenn der pH-Wert erniedrigt wird, normalerweise bis zu einem pH-Wert von etwa 2, welches den Null-Ladungspunkt für nicht modifiziertes Siliziumdioxid darstellt. So ist die Oberflächenladung für nicht modifizierte Siliziumdioxidteilchen bei einem niedrigeren pH-Wert als etwa 8 geringer als für aluminat-modifiziertes Siliziumdioxid. Der pH-Wert des aluminat-modifizierten Siliziumdioxids kann, vorzugsweise mittels eines Ionenaustauscherharzes, geeigneterweise auf einen pH-Wert im Bereich von 3 bis 11, vorzugsweise etwa 4 bis 10, eingestellt werden. Das aluminat-modifizierte Siliziumdioxid kann danach konzentriert werden, um einen Siliziumdioxidgehalt von etwa 1 bis 60 Gew.-% aufzuweisen. Das Verfahren zur Herstellung des aluminat-modifizierten Siliziumdioxids ist weiterhin in "The Chemistry of Silica" von Ralph K. Iler, S. 407 - 409, John Wiley & Sons, 1979 und in U.S. 5,368,833 beschrieben.

Ein analoges Herstellungsverfahren kann für borat-modifiziertes Siliziumdioxid, insbesondere borat-modifiziertes Kieselsol, angewendet werden.

Bei der Herstellung von aluminat- oder borat-modifizierten Kieselsolen werden im Wesentlichen die Produktionsschritte, Entalkalisierung von Wasserglas mittels Ionenaustausch, Einstellung und Stabilisierung der jeweils gewünschten Teilchengrössen(verteilung) der SiO₂-Partikel, Einstellung der jeweils gewünschten SiO₂-Konzentration und der Aluminat- oder Boratmodifikation der SiO₂-Partikel durchgeführt. In keinem dieser Schritte verlassen die SiO₂-Partikel den kolloidal gelösten Zustand. Dadurch erklärt sich das Vorliegen der diskreten Primärpartikel.

Bevorzugt weist das aluminat- oder borat-modifizierte Siliziumdioxid einen Aluminat- oder Boratgehalt von 0,01 bis 1,5 Gewichtsprozent, besonders bevorzugt von 0,05 bis 1,0 Gew.-% bezogen auf das Gesamtgewicht von SiO₂ im unmodifizierten Siliziumdioxid auf.

Der Begriff Modul ist bekannt. Unter Modul in einem silikatischen Bindemittel versteht der Fachmann das analytisch bestimmbare Molverhältnis aus Siliziumdioxid (SiO₂) und Alkalimetalloxid M₂O (M = Lithium, Natrium oder Kalium) im Feststoff des Bindemittels.

Bevorzugt weist das aluminat-oder borat-modifizierte Siliziumdioxid ein Modul von 4,2 bis 6,5 auf.

Das Reaktionsprodukt kann bevorzugt noch zusätzlich ein Mittel zur Gefrierpunktserniedrigung enthalten, wobei das Mittel zur Gefrierpunktserniedrigung einen monofunktionellen und/oder polyfunktionellen Alkohol ausgewählt aus der Gruppe bestehend aus Glycerin, Glykol, Zucker, Di- und Polyethylenglykol darstellen kann.

Bei dem erfindungsgemässen Hitzeschutzelement handelt es sich vorzugsweise um ein Brandschutzverbundglas.

In der vorliegenden Erfindung befindet bzw. befinden sich die Schutzschicht(en) jeweils zwischen wenigstens zwei Trägerelementen. Dabei können Sandwichstrukturen mit einer Schutzschicht zwischen zwei Trägerelementen oder aber Mehrfachsandwichstrukturen mit alternierendem Aufbau von Trägerelementen und Schutzschichten erhalten werden. Bevorzugt befinden sich jeweils aussen Trägerelemente. Als Trägerelemente für das erfindungsgemässe lichtdurchlässige Hitzeschutzelement sind Glaselemente, insbesondere Glasplatten bzw. Glasscheiben, aber auch andere Werkstoffe mit den gewünschten optischen Eigenschaften geeignet, sofern sie den technischen und physikalischen Anforderungen, zum Beispiel an Hitzebeständigkeit, genügen. Besonders bevorzugt sind jedoch Trägerelemente aus Glas. Als Trägermaterial kann auch ganz oder teilweise, thermisch oder chemisch vorgespanntes Glas verwendet werden.

Die erfindungsgemässen lichtdurchlässigen Hitzeschutzelemente können erfindungsgemäss unter Verwendung eines Reaktionsproduktes enthaltend wässrige Alkalisilikatlösung und aluminat- oder boratmodifiziertes Siliziumdioxid, wobei das Reaktionsprodukt ein Modul von 4 bis 7 aufweist, hergestellt werden, indem dieses Reaktionsprodukt in einen Formhohlraum zwischen zwei Trägerelementen eingebracht oder auf ein Trägerelement aufgebracht wird, anschliessend unter Erhaltung des Wassergehaltes zu einer festen Silikatschicht ausgehärtet wird und dabei im ausgehärteten Silikat das Molverhältnis von Siliziumdioxid zu Alkalimetalloxiden (Modul) auf ein Verhältnis von 4:1 bis 7:1 eingestellt wird.

Das erfindungsgemässe Verfahren ermöglicht somit die Herstellung von Verbundelementen, welche aus mehreren mit einem Abstand zueinander angeordneten Trägerelementen bestehen, und anschliessend den Zwischenraum zwischen den Trägerelementen mit dem Reaktionsprodukt, und gegebenenfalls einem oder mehreren weiteren Härtern wie Kieselsol, anorganische oder organische Säuren, Ester, Säureamide, Glyoxale, Alkylencarbonate, Alkalicarbonate und -hydrogencarbonate, Borate, Phosphate oder para-Formaldehyde auszugiessen. Infolge des hohen Wassergehaltes ist die Masse sehr gut fliessfähig und kann ohne Schwierigkeiten auch in die Zwischenräume von Verbundelementen mit geringem Abstand zwischen den Trägerelementen eingegossen werden. Da das Reaktionsprodukt ohne Trocknung, d.h. ohne Abgabe von Wasser, zu einer fertigen Silikatschicht aushärtet, kann auf einen Trocknungsvorgang verzichtet werden, was die Herstellung entsprechender Hitzeschutzelemente wesentlich vereinfacht. Die Reaktions- bzw. Aushärtzeit kann in bekannter Weise durch Erwärmen beschleunigt werden. Die Topfzeit des giessfähigen Reaktionsproduktes ist bei Raumtemperatur auf alle Fälle genügend lang, um einen normalen Produktionsablauf zu ermöglichen. Bei der Herstellung der Hitzeschutzelemente kann das giessfähige Reaktionsprodukt wie beschrieben in einen Formhohlraum zwischen wenigstens zwei Trägerelementen eingebracht, bzw. eingegossen werden. Es ist aber auch möglich, das giessfähige Reaktionsprodukt auf ein Trägerelement aufzubringen und anschliessend ein zweites Trägerelement auf die noch nicht ausgehärtete Schutzschicht aufzulegen oder das zweite Trägerelement nach dem Aushärten der Schutzschicht in der bekannten Weise mit dieser zu verkleben. Bei der Herstellung von Mehrfachsandwichstrukturen nach der Variante des Aufbringens des giessfähigen Reaktionsproduktes auf ein Trägerelement müsste der letztgenannte Prozess mehrfach wiederholt werden. Für solche Strukturen bietet daher die Variante des Eingiessens in entsprechende Hohlräume Vorteile.

Vorzugsweise wird das Reaktionsprodukt vor dem Verarbeiten entgast. Dadurch wird sichergestellt, dass in der ausgehärteten Silikatschicht keine Gaseinschlüsse vorhanden sind, welche die optische Qualität des erfindungsgemässen Hitzeschutzelementes stören könnten. Die Entgasung kann jedoch auch erst nach dem Befüllen der Hohlräume erfolgen. Zur Steigerung der Adhäsion der Silikatschicht an den Trägerelementen kann dem Reaktionsprodukt vor dem Verarbeiten ein Hilfsmittel in Form von anionischen oder nichtionogenen Tensiden zugefügt werden und/oder es können die Oberflächen der Trägerelemente mit einem solchen Mittel vorbehandelt sein. Die Oberflächen der Trägerelemente können bevorzugt auch mit einem Haftvermittler, insbesondere mit einem organofunktionellen Silan und/oder Wachsdispersionen, vorbehandelt sein.

Die erfindungsgemäss hergestellte Schutzschicht aus ausgehärtetem Silikat weist eine gute Eigenfestigkeit auf und bildet eine gute Haftung zu den angrenzenden Trägerelementen, bevorzugt in Form von Glasplatten oder anderen lichtdurchlässigen Bauelementen. Das als Ausgangsmasse verwendete Reaktionsprodukt ist fliessfähig und leicht vergiessbar. Die ausgehärtete Schutzschicht ist von hoher optischer Qualität und Durchlässigkeit und weist eine gute Alterungsbeständigkeit auf. Die besonderen Eigenschaften der Schutzschicht in der Form des ausgehärteten Silikates werden dadurch erreicht, dass die Silikatschicht einen Gehalt an Siliziumdioxid zwischen 30 bis 55 Gew.-% aufweist. Der Gehalt an Alkali-Metalloxid in der Form von Natrium-, Kalium- oder Lithiumoxid oder einer Mischung davon beträgt maximal 16%. Die ausgehärtete Silikatschicht enthält bis zu 60% Wasser. Dadurch erreichen erfindungsgemässe Hitzeschutzelemente mit einer solchen Schutzschicht einen sehr hohen Feuerwiderstandswert, da für den Verdampfungsprozess eine relativ grosse Wassermenge zur Verfügung steht. Erfindungsgemäss führt die Verwendung von aluminat- oder boratmodifiziertem Siliziumdioxid zu einer Verbesserung der Alterungsbeständigkeit der Schutzschicht.

In vorteilhafter Weise ist bei einem lichtdurchlässigen Hitzeschutzelement die Schutzschicht bzw. Silikatschicht zwischen zwei Glasplatten angeordnet und bildet mit diesen ein Verbundelement. Zur Erreichung von höheren Hitzewiderstandswerten werden Hitzeschutzelemente gebildet, bei welchen das Hitzeschutzelement aus mehreren jeweils zwischen zwei Glasplatten angeordneten Silikatschichten besteht und die Glasplatten und die Polysilikatschichten ein Verbundelement bilden. Bei diesen erfindungsgemässen Anordnungen sind die Silikatschichten in direkter Verbindung mit den angrenzenden die Trägerelemente bildenden Glasplatten.

Die Verwendung eines Reaktionsproduktes enthaltend wässrige Alkalisilikatlösung und aluminat- oder borat-modifiziertes Siliziumdioxid in Schutzschichten von lichtdurchlässigen Hitzeschutzelementen ist bisher in der Literatur in dieser Form nicht beschrieben.

Weiterhin Gegenstand der vorliegenden Erfindung ist demnach eine solche Verwendung eines Reaktionsproduktes enthaltend wässrige Alkalisilikatlösung und aluminat- oder borat-modifiziertes Siliziumdioxid in wenigstens einer transparenten, zwischen zwei Trägerelementen angeordneten Schutzschicht eines Hitzeschutzelementes, dadurch gekennzeichnet, dass das Reaktionsprodukt ein Molverhältnis Siliziumdioxid zu Alkalimetalloxid (Modul) von 4 bis 7 aufweist.

Die Vorzugsbereiche betreffend das erfindungsgemässe lichtdurchlässige Hitzeschutzelement gelten hier analog.

Eine solche Verwendung ist insbesondere deswegen überraschend, da aus eingangs genanntem Grund eine Aluminat- oder Boratmodifizierung von Kieselsolen bei einer solchen Verwendung erwartungsgemäss eher zu verfrühter Kristallisation, und damit zur Eintrübung der Schutzschicht führen sollte, als eine solche zu verzögern.

Die folgenden Beispiele dienen lediglich der beispielhaften Erläuterung der Erfindung und sind nicht als Beschränkung aufzufassen.

### Beispiele

Reaktionsprodukte, im Folgenden Brandschutzschichtmasse genannt, werden durch Umsetzung von Kaliwassergläsern mit aluminat- oder borat-modifizierten Kieselsolen hergestellt.

Kaliwassergläser mit einem speziellen Modul und Feststoffgehalt sind kommerziell verfügbar, können aber auch wie im Folgenden gezeigt durch Umsetzung von Kieselsolen mit Kaliumhydroxid hergestellt werden.

### Beispiel 1: Herstellung von Kaliwasserglas mit einem Modul von 2,25 und einem Feststoffgehalt von 55 Gew.-%

2460 g handelsübliche Kaliumhydroxid-Plätzchen mit einem KOH-Gehalt von ca. 86,5 Gew.-% wurden in einer 6 Liter-Dreihalskolbenrührapparatur mit Kühler und Tropftrichter zusammen mit 429 g deionisiertem Wasser vorgelegt. Der Dreihalskolben befand sich in einem Wasserbad. Unter Kühlung wurden 5127 g Levasil^{®} 50/50% (spezifische Oberfläche: etwa 50 m²/g; Feststoffgehalt: ca. 50, 5 Gew.-%; Hersteller: H. C. Starck GmbH) so zugegeben, dass eine Temperatur zwischen 60 und 80 °C gehalten wurde.

Nach der Kieselsolzugabe wurde noch 3 Stunden bei 70°C gerührt.

Die als Nebenprodukt der Reaktion gebildeten Niederschläge wurden nach ihrer Sedimentation abdekantiert.

### Beispiel 2: Aluminat- oder Borat-Modifizierungen von Kieselsolen mit einer spezifischen Oberfläche von etwa 50 m²/g und etwa 50,5 Gew.-% Feststoffgehalt

Der Aluminat- bzw. Boratgehalt wird in Gew.-% gerechnet als Al₂O₃ bzw. B₂O₃ bezogen auf den Feststoffgehalt des nicht modifizierten Kieselsol angegeben.

Es wurden beispielsweise Sole mit a) 0,64 und b) 0,32 Gew.-% Al₂O₃ bzw. c) 0,22 Gew.-% B₂O₃ auf folgende Weise hergestellt:

In einem Dreihalskolben mit Rührer, Heizpilz, Tropftrichter und Destillationsbrücke wurden 1000 g Levasil^{®} 50/50% vorgelegt. Dazu wurden a) 60 ml oder b) 120 ml einer Lösung von 25 g handelsüblichem Natriumaluminat in 500 ml Wasser bzw. c) 79 ml einer Lösung von 5 g handelsüblichem Natriumtetraborat und 6,6 g 10%iger Natronlauge in 250 ml Wasser langsam zugetropft.

Nach Beendigung der Zugabe wurden die Mischungen aufgeheizt und soviel ml Wasser abdestilliert, dass der ursprüngliche Feststoffgehalt wieder erreicht wurde.

Danach wurde die Destillationsbrücke durch einen Rückflusskühler ersetzt, und die Mischung bis zu einer Gesamtkochzeit von 3 Stunden zum Rückfluss erhitzt.

Gebildetete unlösliche Anteile wurden über einen Zeitraum von 24 Stunden absitzen gelassen und durch anschliessendes Dekantieren abgetrennt.

### Beispiel 3: Herstellung einer Brandschutzschichtmasse mit einem Modul von 4,7 aus Kaliwasserglas und einem Aluminat-modifizierten Kieselsol mit 0,32 Gew.-% Al₂O₃

In einer 250 ml-Mehrhalskolbenrührapparatur mit Gasableitungsstutzen wurden 170, 4 g eines gemäss Beispiel 1 charakterisierten Kaliwasserglases mit 13,5 g handelsüblichem Ethylenglykol vorgelegt. Die Mischung wurde mittels eines heizbaren Wasserbades auf 20 °C temperiert.

Innerhalb von 30 Minuten wurden 116 g eines gemäss Beispiel 2a) hergestellten Kieselsols mit 0,32 Gew.-% Al₂O₃, 50 m²/g spezifischer Oberfläche und 50,5% Feststoffgehalt zugegeben.

Die Reaktionsmischung wurde weitere 1,5 Stunden bei 20 °C gerührt. Danach wurde innerhalb von 30 Minuten auf 40 °C aufgeheizt und diese Temperatur für 30 Minuten gehalten.

Durch Wasseraustausch im Temperierbad wurde innerhalb von 15 Minuten auf 20 °C abgekühlt. Bei dieser Temperatur wurde weitere 60 Minuten gerührt. Während der letzten 20 Minuten wurde über den Gasableitungsstutzen ein Wasserstrahlvakuum von etwa 110 mbar angelegt.

Von dieser Reaktionsmischung wurden etwa 60 ml mittels Glaskolbenpipette in eine 100 ml-Glasflasche gefüllt, die mit einem Kronkorken verschlossen wurde.

Die abgefüllte Probe wurde etwa 20 Stunden bei 80 °C im Trockenschrank getempert.

Danach wurde visuell das Fehlen eines Bodensatzes als Kriterium für eine vollständige Umsetzung bestätigt sowie mit einem geeigneten Trübungsphotometer (z. B. Typ LTP 5 der Firma Lange) eine Trübung von 1,6 TE/F (Trübungseinheiten Formazin-bezogen) gemessen.

Danach wurde die Lagerung der Probe bei 80 °C bei regelmässiger Messung der Trübung so lange fortgesetzt, bis 3,5 TE/F nach 63 Tagen erreicht wurden, d.h. eine Trübung war visuell erkennbar.

### Beispiel 4: Herstellung einer Brandschutzschichtmasse mit einem Modul von 4,7 aus Kaliwasserglas und einem Aluminat-modifizierten Kieselsol mit 0,64 Gew.-% Al₂O₃

Gemäss der unter Beispiel 3 beschriebenen Reaktionsführung wurde ein gemäss Beispiel 2b) hergestelltes Kieselsol mit 0,64 Gew.-% Al₂O₃. 50 m²/g spezifischer Oberfläche und 50,5% Feststoffgehalt umgesetzt.

Nach 20 Stunden Temperung wie in Beispiel 3 beschrieben wies die Probe eine Trübung von 4,5 TE/F auf. Durch Vervollständigung der Umsetzung reduzierte sich die Trübung nach 3 Tagen auf 2,1 TE/F.

Nach 83 Tagen wurde ein Wiederanstieg der Trübung auf 3,5 TE/F festgestellt.

### Beispiel 5: Herstellung einer Brandschutzschichtmasse mit einem Modul von 4,7 aus Kaliwasserglas und einem Boratmodifizierten Kieselsol mit 0,22 % B₂O₃

Gemäss der unter Beispiel 3 beschriebenen Reaktionsführung wurde ein gemäss Beispiel 2c) hergestelltes Kieselsol mit 0,22 Gew.-% B₂O₃, 50 m²/g spezifischer Oberfläche und 50,5% Feststoffgehalt umgesetzt.

Nach 20 Stunden Temperung wie in Beispiel 3 beschrieben zeigte die Probe einen Bodensatz und wies eine Trübung von 2,2 TE/F auf.

Der Anstieg der Trübung auf 3,5 TE/F wurde nach 25 Tagen gefunden.

### Vergleichsbeispiel: Herstellung einer Brandschutzschichtmasse aus Kaliwasserglas und einem nicht modifizierten Kieselsol

Gemäss der unter Beispiel 3 beschriebenen Reaktionsführung wurde ein nicht modifiziertes Kieselsol mit 50 m²/g spezifischer Oberfläche und 50,5% Feststoffgehalt umgesetzt.

Nach 20 Stunden Temperung wie in Beispiel 3 beschrieben zeigte die Probe einen Bodensatz und wies eine Trübung von 1,5 TE/F auf.

Der Anstieg der Trübung auf 3,5 TE/F wurde nach 20 Tagen festgestellt.

## Patentansprüche

1. Lichtdurchlässiges Hitzeschutzelement mit mindestens zwei Trägerelementen und mindestens einer zwischen zwei Trägerelementen angeordneten, transparenten Schutzschicht umfassend ein Reaktionsprodukt enthaltend wässrige Alkalisilikatlösung und aluminat- oder borat-modifiziertes Siliziumdioxid, **dadurch gekennzeichnet, dass** das Reaktionsprodukt ein Molverhältnis Siliziumdioxid zu Alkalimetalloxid von 4 bis 7 aufweist.

2. Lichtdurchlässiges Hitzeschutzelement gemäss Anspruch 1, **dadurch gekennzeichnet, dass** das Siliziumdioxid ausgewählt wird aus der Gruppe bestehend aus Kieselsol, Fällungssiliziumdioxid, Kieselgel oder pyrogenem Siliziumdioxid.

3. Lichtdurchlässiges Hitzeschutzelement gemäss Anspruch 1 oder 2, **dadurch gekennzeichnet, dass** das Siliziumdioxid Kieselsol ist.

4. Lichtdurchlässiges Hitzeschutzelement gemäss wenigstens einem der Ansprüche 1 bis 3, **dadurch gekennzeichnet, dass** das Siliziumdioxid einen Aluminat- oder Boratgehalt von 0,01 bis 2,0 Gew.-%, bezogen auf das Gesamtgewicht des SiO₂ im unmodifizierten Siliziumdioxid aufweist.

5. Lichtdurchlässiges Hitzeschutzelement gemäss Anspruch 1 , **dadurch gekennzeichnet, dass** die wässrige Alkalisilikatlösung Wasserglas darstellt.

6. Lichtdurchlässiges Hitzeschutzelement gemäss wenigstens einem der Ansprüche 1 bis 5., **dadurch gekennzeichnet, dass** das Reaktionsprodukt ein Molverhältnis Siliziumdioxid zu Alkalimetalloxid von 4,2 bis 6,5 aufweist.

7. Lichtdurchlässiges Hitzeschutzelement gemäss einem der Ansprüche 1 - 6, **dadurch gekennzeichnet, dass** das Reaktionsprodukt zusätzlich ein Mittel zur Gefrierpunkierniedrigung enthält.

8. Lichtdurchlässiges Hitzeschutzelement gemäss wenigstens einem der Ansprüche 1 bis 7, **dadurch gekennzeichnet, dass** das Hitzeschutzelement ein Brandschutzverbundglas ist.

9. Verfahren zur Herstellung eines lichtdurchlässigen Hitzeschutzelementes gemäss einem der Ansprüche 1 bis 8, **dadurch gekennzeichnet, dass** das Reaktionsprodukt in einen Formhohlraum zwischen zwei Trägerelementen eingebracht oder auf ein Trägerelement aufgebracht wird, anschliessend unter Erhaltung des Wassergehaltes zu einer festen Silikatschicht ausgehärtet wird und dabei im ausgehärteten Silikat das Molverhältnis von Siliziumdioxid zu Alkalimetalloxiden auf ein Verhältnis von 4:1 bis 7:1 eingestellt wird.

10. Verfahren gemäss Anspruch 9, **dadurch gekennzeichnet, dass** die Oberflächen der Trägerelemente mit einem Haftvermittler in der Form eines organofunktionellen Silans und/oder Wachsdispersionen vorbehandelt werden.

11. Verwendung eines Reaktionsproduktes enthaltend wässrige Alkalisilikatlösung und aluminat- oder borat-modifiziertes Siliziumdioxid in wenigstens einer transparenten, zwischen zwei Trägerelementen angeordneten Schutzschicht eines Hitzeschutzelementes, **dadurch gekennzeichnet, dass** das Reaktionsprodukt ein Molverhältnis Siliziumdioxid zu Alkalimetalloxid von 4 bis 7 aufweist.

12. Verwendung gemäss Anspruch 11, **dadurch gekennzeichnet, dass** das Reaktionsprodukt ein Molverhältnis Siliziumdioxid zu Alkalimetalloxid von 4,2 bis 6,5 aufweist.

13. Verwendung gemäss Anspruch 11 oder 12, **dadurch gekennzeichnet, dass** das Siliziumdioxid einen Aluminat- oder Boratgehalt von 0,01 bis 1,5 Gew.-%, bevorzugt von 0,05 bis 1,0 Gew.-% bezogen auf das Gesamtgewicht von SiO₂ im unmodifizierten Siliziumdixoid aufweist.

14. Verwendung gemäss wenigstens einem der Ansprüche 11 bis 13, **dadurch gekennzeichnet, dass** das Hitzeschutzelement ein Brandschutzverbundglas ist.

## Claims

1. A transparent heat protection element having at least two support elements and at least transparent one protective layer arranged between the two support elements, the heat protection element comprising a reaction product containing aqueous alkali metal silicate solution and aluminate- or borate-modified silicon dioxide, **characterized in that** the reaction product has a molar ratio of silicon dioxide to a total amount of alkali metal oxide from 4 to 7.

2. The transparent heat protection element as claimed in claim 1, **characterized in that** the silicon dioxide is selected from the group consisting of silica sol, precipitated silicon dioxide, silica gel and pyrogenic silicon dioxide.

3. The transparent heat protection element as claimed in claim 1 or 2, **characterized in that** the silicon dioxide is silica sol.

4. The transparent heat protection element as claimed in at least one of claims 1 to 3, **characterized in that** the silicon dioxide has an aluminate or borate content of from 0.01 to 2.0% by weight, based on the total weight of the SiO₂ in the unmodified silicon dioxide.

5. The transparent heat protection element as claimed in claim 1, **characterized in that** the aqueous alkali metal silicate solution is water glass.

6. The transparent heat protection element as claimed in at least one of claims 1 to 5, **characterized in that** the reaction product has a molar ratio of silicon dioxide to a total amount of alkali metal oxide from 4.2 to 6.5.

7. The transparent heat protection element as claimed in any of claims 1 to 6, **characterized in that** the reaction product additionally contains an agent for lowering the freezing point.

8. The transparent heat protection element as claimed in at least one of claims 1 to 7, **characterized in that** the heat protection element is a fire protection composite glass.

9. A process for producing a transparent heat protection element as claimed in any of claims 1 to 8, **characterized in that** the reaction product is introduced into a mold cavity between two support elements or applied to a support element, subsequently hardened to form a solid silicate layer with retention of the water content and the molar ratio of silicon dioxide to alkali metal oxides in the hardened silicate is set to a ratio of from 4:1 to 7:1.

10. The process as claimed in claim 9, **characterized in that** the surfaces of the support elements are pretreated with a bonding agent in the form of an organofunctional silane and/or wax dispersions.

11. The use of a reaction product containing aqueous alkali metal silicate solution and aluminate- or borate-modified silicon dioxide in at least one transparent protective layer of a heat protection element arranged between the two support elements, **characterized in that** the reaction product has a molar ratio of silicon dioxide to a total amount of alkali metal oxide from 4 to 7.

12. The use as claimed in at least one of claims 11, **characterized in that** the reaction product has a molar ratio of silicon dioxide to a total amount of alkali metal oxide from 4.2 to 6.5.

13. The use as claimed in claim 11 or 12, **characterized in that** the silicon dioxide has an aluminate or borate content of from 0.01 to 1.5% by weight, preferably from 0.05 to 1.0% by weight, based on the total weight of SiO₂ in the unmodified silicon dioxide.

14. The use as claimed in at least one of claims 11 to 13, **characterized in that** the heat protection element is a fire protection composite glass.

## Revendications

1. Elément transparent de protection contre la chaleur présentant au moins deux éléments de support et au moins une couche transparente de protection disposée entre les deux éléments de support et comprenant un produit de réaction qui contient une solution aqueuse de silicate alcalin et de dioxyde de silicium modifié par aluminate ou borate,
**caractérisé en ce que**
le produit de réaction présente un rapport molaire entre le dioxyde de silicium et l'oxyde de métal alcalin de 4 à 7.

2. Elément transparent de protection contre la chaleur selon la revendication 1, **caractérisé en ce que** le dioxyde de silicium est sélectionné dans l'ensemble constitué du sol de silice, du dioxyde de silicium précipité, du gel de silice ou de dioxyde de silicium pyrogène.

3. Elément transparent de protection contre la chaleur selon les revendications 1 ou 2, **caractérisé en ce que** le dioxyde de silicium est un sol de silice.

4. Elément transparent de protection contre la chaleur selon au moins l'une des revendications 1 à 3, **caractérisé en ce que** le dioxyde de silicium présente une teneur en aluminate ou borate de 0,01 à 2,0 % en poids par rapport au poids total du SiO₂ dans le dioxyde de silicium non modifié.

5. Elément transparent de protection contre la chaleur selon la revendication 1, **caractérisé en ce que** la solution aqueuse de silicate alcalin est un verre liquide.

6. Elément transparent de protection contre la chaleur selon au moins l'une des revendications 1 à 5, **caractérisé en ce que** le produit de réaction présente un rapport molaire entre le dioxyde de silicium et l'oxyde de métal alcalin de 4,2 à 6,5.

7. Elément transparent de protection contre la chaleur selon les revendications 1 à 6, **caractérisé en ce que** le produit de réaction contient en supplément un agent d'abaissement du point de congélation.

8. Elément transparent de protection contre la chaleur selon au moins l'une des revendications 1 à 7, **caractérisé en ce que** l'élément de protection contre la chaleur est un verre feuilleté de protection contre l'incendie.

9. Procédé de fabrication d'un élément transparent de protection contre la chaleur selon l'une des revendications 1 à 8, **caractérisé en ce que** le produit de réaction est placé dans une cavité formée entre deux éléments de support ou est placé sur un élément de support, est ensuite durci en une couche solide de silicate en conservant la teneur en eau, le rapport molaire entre le dioxyde de silicium et les oxydes de métal alcalin dans le silicate durci étant établi dans une proportion de 4:1 à 7:1.

10. Procédé selon la revendication 9, **caractérisé en ce que** les surfaces des éléments de support sont prétraitées avec un agent d'adhérence qui présente la forme d'un silane organofonctionnel et/ou d'une dispersion de cire.

11. Utilisation d'un produit de réaction contenant une solution aqueuse de silicate alcalin et de dioxyde de silicium modifié par aluminate ou borate dans au moins une couche transparente de protection disposée entre deux éléments de support d'un élément de protection contre la chaleur,
**caractérisée en ce que**
le produit de réaction présente un rapport molaire entre le dioxyde de silicium et l'oxyde de métal alcalin de 4 à 7.

12. Utilisation selon la revendication 11, **caractérisée en ce que** le produit de réaction présente un rapport molaire entre le dioxyde de silicium et l'oxyde de métal alcalin de 4,2 à 6,5.

13. Utilisation selon les revendications 11 ou 12, **caractérisée en ce que** le dioxyde de silicium présente une teneur en aluminate ou borate de 0,01 à 1,5 % en poids et mieux de 0,05 à 1,0 % en poids par rapport au poids total du SiO₂ dans le dioxyde de silicium non modifié.

14. Utilisation selon au moins l'une des revendications 11 à 13, **caractérisée en ce que** l'élément de protection contre la chaleur est un verre feuilleté de protection contre l'incendie.
